# EUROPEAN PATENT APPLICATION

(11) **EP 0 625 434 A1**
(43) Date of publication of application: **23.11.1994**
(21) Application number: 94303367.0
(22) Date of filing: 11.05.1994
(51) Int. Cl.: B60B 33/02, B60B 33/00

(54) **Caster wheel assemblies**

(30) Priority: 15.05.1993 GB 9310022
(71) Applicant: Pihlens, Alfred Percy Rudolf, Hungerford, Berkshire RG17 0JG (GB); Pihlens, Gertrude Maude, Hungerford, Berkshire RG17 0JG (GB)
(72) Inventor: Pihlens, Alfred Percy Rudolf, Hungerford, Berkshire, RG17 0JG (GB)
(74) Representative: Harding, Richard Patrick

(57) **Abstract**

A caster wheel assembly 1' for a shopping trolley comprises a support member 2' fixed to a trolley chassis, a carrier member 4' freely rotatable about a vertical axis 5' with respect to the support member 2', and a wheel 6' carried by the carrier member 4' so as to be rotatable about a horizontal axis 7' offset from the vertical axis 5'. A cam follower 24' in the form of two planet wheels 26' rotatably mounted on a lower portion 30 of the support member 2' engages a cam surface 21' having an undulating profile on the carrier member 4' in order to bias the wheel 6' of the assembly towards a direct forward line. In order to steer the trolley to one side or the other of the direct forward line, a sufficient steering force must be applied to the trolley in order to overcome this biasing action, and this overcomes any tendency of the trolley to move in a direction other than the intended direction of travel.

## Description

This invention relates to caster wheel assemblies, and is concerned more particularly, but not exclusively, with such assemblies for fitting to shopping trolleys, luggage trolleys and the like.

Conventionally shopping trolleys are fitted with caster wheel assemblies which are such as to enable the trolley to be steered in the required direction by simply applying a steering force in that direction to the handle of the trolley. Because the wheel of each assembly is mounted on a carrier member which is freely rotatable about a vertical axis and the wheel is rotatable about a horizontal axis offset from that vertical axis, the wheel will be automatically orientated by the steering force in the intended direction of travel. However, because the carrier member of each assembly is freely rotatable about a vertical axis, there is a tendency for the wheels to become aligned along a direction other than the intended direction of travel, particularly when the ground is not flat or under conditions where the trolley is heavily loaded, and this can result in unpredictable movements of the trolley which may cause damage or injury.

It is an object of the invention to provide a new form of caster wheel assembly which renders movements of the trolley, or other vehicle to which the assembly is attached, more predictable.

This object is achieved by the caster wheel assembly which is the subject of the accompanying claims.

Such assemblies, which are preferably made in such a manner as to enable them to be fixed to existing trolleys in place of conventional caster wheel assemblies, may be designed to ensure that the trolley moves only in a direct forward line unless deliberately directed out of this line by application of a suitable steering force to the handle of the trolley.

In order that the invention may be more fully understood, two caster wheel assemblies in accordance with the invention will now be described, by way of example, with reference to the accompanying drawings, in which:
Figure 1 is a vertical section through a first assembly with the wheel orientated to one side;
Figures 2 and 3 show parts of the first assembly;
Figure 4 is a vertical section through the first assembly with the wheel orientated towards the front;
Figure 5 is a diagram showing the profile of the cam surface in developed view (over only one half of the circumference); and
Figure 6 is a side view of a second assembly.

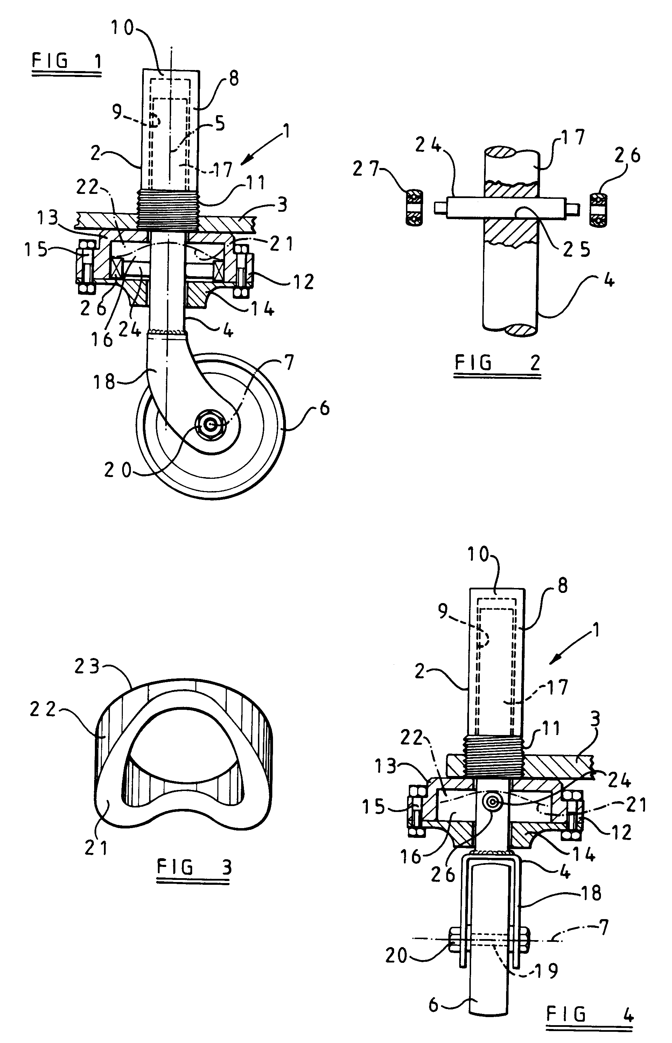

Referring to Figures 1 and 4, the first caster wheel assembly 1 comprises a support member 2 fixed to a chassis 3 of a trolley, a carrier member 4 freely rotatable about a vertical axis 5 with respect to the support member 2, and a wheel 6 carried by the carrier member 4 so as to be rotatable about a horizontal axis 7 offset from the vertical axis 5.

The support member 2 comprises a tubular part 8 having a central bore 9 closed at one end by an end wall 10 and having an external screwthread 11 for screwthreaded attachment of the assembly to the trolley chassis 3, and a housing part 12 consisting of an upper cup-shaped portion 13 and a lower portion 14 which are secured together at their peripheries by bolts 15 to define an inner chamber 16 therebetween. The tubular part 8 and the upper portion 13 of the housing part 12 together constitute an upper metal casting, whereas the lower portion 14 of the housing part 12 constitutes a lower metal casting.

The carrier member 4 comprises a shaft part 17 which extends through the chamber 16 and into the bore 9 in the tubular part 8 of the support member 2, and a forked part 18 welded to the shaft part 17 and carrying the wheel 6 on an axle 19 secured within the forked part 18 by nuts 20. The wheel 6 is freely rotatable on the axle 19.

In order to ensure that the wheel 6 is at all times orientated in a direct forward line (as shown in Figure 4), except when deliberate action is taken to steer the wheel out of that line by exerting a suitable steering force on the trolley, the assembly incorporates a biasing arrangement biasing the carrier member 4 about its vertical axis 5 towards the required orientation with respect to the support member 2. In order to steer the trolley to one side or the other of the direct forward line, a sufficient steering force must be applied to the trolley in order to overcome the biasing action, and the biasing action will automatically tend to return the wheel to the direct forward line when the steering force is removed.

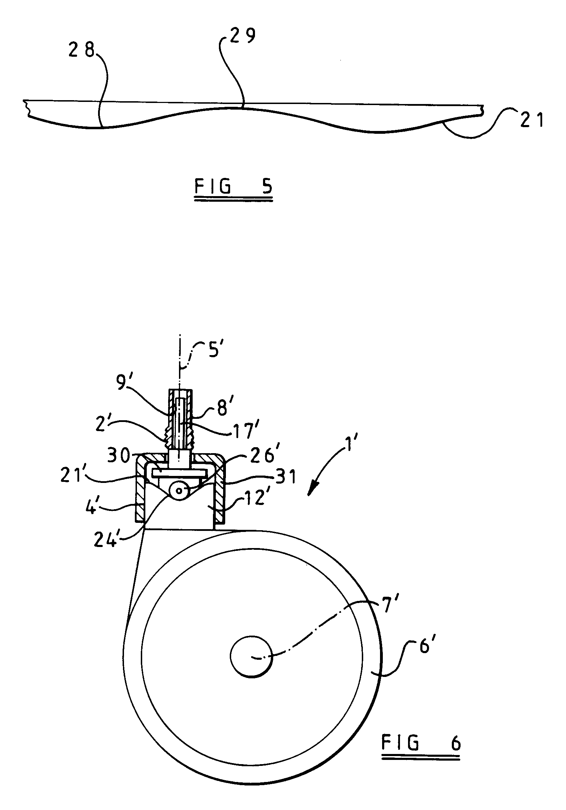

Although various biasing arrangements are possible within the scope of the invention, the biasing arrangement illustrated in the drawings comprises a cam surface 21 constituting the lower surface of an annular bearing element 22 which is an interference fit within the chamber 16 and which has a flat upper surface 23 which engages the inside of the upper cup-shaped portion 13. Figure 3 shows the bearing element 22 removed from the chamber 16 and inverted so that the cam surface 21 is uppermost. The biasing arrangement further comprises a cam follower 24 consisting of a transverse axle 24 fixedly extending through a transverse bore 25 in the shaft part 17 of the carrier member 4, as shown in Figure 2, and two planet wheels 26 provided with ball races 27 mounted on the ends of the axle 24 (but shown removed from the axle ends in Figure 2).

As is shown particularly clearly by the diagram of Figure 5 showing the developed profile of half of the cam surface 21, the cam surface profile is undulating and consists of two symmetrical crests 28 and troughs 29 equiangularly spaced about its circumference. It is important that the bearing element 22 is orientated within the chamber 16 so that the crests 28 lie along a line from side to side, as may be seen in Figure 1, and so that the crests 29 lie along a line from back to front, as may be seen in Figure 4. This is because, as will be appreciated particularly from referring to Figure 4, the planet wheels 26 of the cam follower 24 are caused to bear against the cam surface 21, and the weight of the trolley acting on the wheel assembly will tend to bias the carrier member 4 towards the orientation in which the planet wheels 26 engage within the troughs 29 of the cam surface 21, thus ensuring that the wheel 6 is orientated along the direct forward line.

Whilst the wheel 6 may be steered away from the direct forward line by exerting an appropriate steering force on the trolley, this will cause the planet wheels 26 to ride out of the troughs 29 (until they reach extreme positions where they engage the crests 28 of the cam surface 21 as shown in Figure 1) resulting in rising of the support member 2, and hence the trolley, relative to the carrier member 4. Thus the weight of the trolley will tend to return the planet wheels 26 to the position shown in Figure 4, and the wheel 6 to the direct forward line, when the steering force is removed.

Whilst the above described biasing arrangement is preferred, other biasing arrangements which may be used include arrangements utilising springs or magnetic elements to tend to bias the carrier member to a datum position.

Figure 6 shows the second caster wheel assembly 1' which is similar to the first caster wheel assembly 1 already described with reference to Figures 1 to 5 except that the cam surface is fixed in relation to the wheel carrier member and the cam follower is fixed in relation to the trolley, rather than the carrier surface being fixed in relation to the trolley and the cam follower being fixed in relation to the wheel carrier member as in the previously described assembly.

Since the two assemblies are otherwise of similar construction like parts are denoted by the same reference numerals in Figure 6 as in the previous figures but with the addition of a prime thereto. Although not shown in Figure 6, it will be appreciated that the support member 2' is intended to be fixed to a trolley chassis in a similar manner to that already described with reference to Figures 1 and 4. In this case the housing part 12' is part of the wheel carrier member 4', and the two planet wheels 26' of the cam follower 24' are carried by bearing races fixed to diametrically opposite portions of a lower portion 30 of the support member 2' and engage the cam surface 21' which is constituted by the circular peripheral portion of the housing part 12'. The housing part 12' also includes an upper cover part 31 which is secured in position relative to the carrier member 4 in order to retain the carrier member 4' in engagement with the support member 2' whilst permitting relative movement between the cam follower 24' and cam surface 21' in a similar manner to that already described with reference to Figure 5.

## Claims

1. A caster wheel assembly comprising a fixed support member (2, 2'), a carrier member (4, 4') freely rotatable about a vertical axis (5, 5') with respect to the support member (2, 2'), and a wheel (6, 6') carried by the carrier member (4, 4') so as to be rotatable about a horizontal axis (7, 7') offset from said vertical axis (5, 5'), characterised by biasing means (21, 24; 21', 24') for biasing the carrier member (4, 4') about said vertical axis (5, 5') towards a predetermined orientation with respect to the support member (2, 2').

2. A caster wheel assembly according to claim 1, characterised in that the biasing means comprises a cam surface (21, 21') on one of the members (2, 4') and a cam follower (24, 24') on the other member (4, 2') engaging the cam surface (21, 21').

3. A caster wheel assembly according to claim 2, characterised in that the cam surface (21, 21') has an undulating profile, there being limited freedom of vertical movement between the members (2, 4; 2', 4') so as to permit the cam follower (24, 24') to follow the undulating profile of the cam surface (21, 21') during relative rotation of the members (2, 4; 2', 4') and so that the cam follower (24, 24') will tend to be biased towards a position corresponding to said predetermined orientation by a downwardly acting force exerted on the assembly.

4. A caster wheel assembly according to claim 3, characterised in that the cam surface (21, 21') is annular and has a profile comprising crests (28) and troughs (29) alternating about its circumference.

5. A caster wheel assembly according to claim 2, 3 or 4, characterised in that the cam follower (24, 24') comprises at least one planet wheel (26, 26') rotatable about a transverse axis relative to said vertical axis (5, 5').

6. A caster wheel assembly according to claim 5, characterised in that the cam follower (24') is provided on the support member (2') and comprises two planet wheels (26') mounted on opposite sides of the support member (2').

7. A caster wheel assembly according to any one of claims 2 to 6, characterised in that the cam surface (21') is constituted by an upper surface of a bearing element fixed to the carrier member (4').

8. A caster wheel assembly according to any preceding claim, characterised in that the support member (2, 2') incorporates a tubular part (8, 8') within which a shaft part (17) of the carrier member (4, 4') is received.

9. A caster wheel assembly according to claim 8, characterised in that the tubular part (8, 8') of the support member (2, 2') has an external screwthread (11) for attachment of the assembly to a trolley.

10. A trolley incorporating at least one caster wheel assembly according to any preceding claim.
